# EUROPEAN PATENT SPECIFICATION

(11) **EP 3 619 260 B1**
(45) Date of publication and mention of the grant of the patent: **06.07.2022**
(21) Application number: 18722036.3
(22) Date of filing: 03.05.2018
(51) Int. Cl.: C09J 11/02, C08K 3/32, C08K 5/13, C08K 5/134, C08K 5/17, C08K 5/18, C08K 5/524, C08K 13/02, C08K 5/372

(54) **STABILISING COMPOSITION**
STABILISIERENDE ZUSAMMENSETZUNG
COMPOSITION STABILISANTE

(30) Priority: 04.05.2017 GB 201707120
(43) Date of publication of application: 11.03.2020
(73) Proprietor: SI Group Switzerland (CHAA) GmbH, 4133 Pratteln (CH)
(72) Inventor: EBENEZER, Warren J., Bramhall Stockport SK7 2JQ (GB); HILL, Jonathan, Flixton Manchester M41 5GR (GB)
(74) Representative: Gordon, Kirsteen Helen
(86) International application number: PCT/EP2018/061381
(87) International publication number: WO 2018/202791

(56) References cited:
- DE-A1-102013 006 638
- US-A- 4 328 132
- US-A- 5 451 624
- US-A1- 2003 173 544
- US-A1- 2013 203 911
- US-A1- 2016 280 970
- US-B2- 8 906 995

## Description

The present invention relates to stabilising compositions. More specifically, but not exclusively, the present invention relates to stabilising compositions for stabilising polymers such as polyolefins.

Polymers are used in a wide variety of applications. For many polymer applications, it is desirable for the polymer to retain certain of its properties during storage, handling and subsequent application. More specifically, it may be desirable for the polymer to retain its melt flow properties, viscosity and have good colour stability, even during prolonged or repeated exposure to heat.

To aid retention of polymer properties, such as melt flow, viscosity and colour stability, it is known to add different types of additives to the polymer, for example phenolic antioxidants, phosphite antioxidants, or combinations thereof.

Our international application WO2015/055852 describes a stabilising composition for hot melt adhesives, comprising: a first stabilising component comprising at least one phenolic antioxidant; a second stabilising component comprising at least one phosphite antioxidant; and a third stabilising component comprising at least one antioxidant containing a sulphur group having the formula -CH₂-(S)ₓ-CH₂-, wherein x = 1 or 2, and wherein neither of the -CH₂- groups is directly bonded to an aromatic group.

WO2015/055852 contemplates the use of acid scavengers in the stabilising composition. The acid scavengers are selected from epoxidized oils, metal salts of fatty acids, metal oxides, metal hydroxides, metal carbonates, metal salts and hydrotalcite-like compounds. All of these acid scavengers contemplated are traditional acid scavengers for polymers.

Degradation of polymers may produce acidic products which may cause acceleration of the degradative process. Catalytic residues in polymers may also be acidic and may contribute to, or cause, such degradation or the acceleration thereof. It is known to include acid scavengers in polymeric compositions to counteract this effect, for example stearate salts. Acid scavengers act to maintain a relatively high pH in the polymer. However, high pH can cause phenolic antioxidants to discolour. The inclusion of phosphite antioxidants and/or sulphur-containing antioxidants in the polymeric composition can ameliorate this effect i.e. reduce discolouration, but only to a limited extent.

Other problems may arise when using phosphite antioxidants which tend to undergo hydrolysis in situ when exposed to high or low pH environments. Similar problems may be experienced with sulphur-containing antioxidants. Acidic conditions may also degrade the functionality of aminic antioxidants by protonating the aminic nitrogen.

Buffering agents tend to be weak acids or weak bases which are used to maintain the pH of a solution close to a chosen value upon the addition of another acidic or basic compound. Buffering agents show little change in pH when small amounts of acids or bases are added thereto. Buffering agents are usually added to water to form an aqueous buffer solution. Buffering agents have a wide range of applications including in agriculture, food processing, textile dyeing, biochemistry, medicine and photography.

For example, US2013/0203911 describes a blended polycarbonate composition comprising: a hydrolytic stabilizer composition comprising a calcined hydrotalcite and an inorganic buffer salt; a polycarbonate polymer; at least one impact modifier; and one or more polymer composition additives.

US2009/012197 describes a stabilizer solution which can be used in the production of hot-cure flexible polyurethane foams, and which comprises a polyethersiloxane, organic surfactant, water and organic solvent additions. The stabilizer solution may include a buffer substance.

EP0775717 describes a method comprising conducting a hydrosilylation reaction in an organic solvent; removing the organic solvent under reduced pressure; then blending in a quantity of water; subsequently eliminating the water under reduced pressure; and thereafter adding from 5 to 1000 ppm of antioxidant, and optionally from 1 to 500 ppm of buffer having a pH from 5.5 to 8 when dissolved in water.

WO2014/193818 describes a pharmaceutical composition comprising a LMWH preparation having at least one chain having a glycol split uronic acid residue in the preparation; and one or more buffering agents (e.g. a phosphate buffer, citrate buffer, a histidine buffer, a maleate buffer, a succinate buffer, an acetate buffer, malate buffer, or any combination thereof).

GB1420609 describes a fibrous or non-fibrous water-insoluble hydrophilic cellulosic sheet containing a plasticizing amount of a polyalkylene glycol and a buffering agent which buffers the plasticized sheet to a pH in the range of from 5 to 8.5.

Buffering agents are also known to be used in adhesive applications.

DE102013006638 describes an adhesive composition comprising an aqueous polychloroprene dispersion with a viscosity of at least 3000 mPa and a solid content of at least 50 wt. % and 0.05 to 0.5 wt. % of a thickening agent. The adhesive composition may also include a buffer selected from amino acids.

US2013/123400 describes an adhesive based on a polychloroprene dispersion with a buffer system comprising at least one acid compound and glycerin which activates and stabilises the adhesive.

US7,579,394 describes an adhesion promoter for hot melt adhesives and pressure sensitive adhesives, comprising a silane composition formed by admixing a hydrolytic silane compound with an aqueous buffer solution.

CN105219306 and CN102268233 also describe buffering agents being used in the preparation of adhesives.

However, there are numerous disadvantages associated with the prior art constructions, for example discolouration and changes in viscosity, particularly when exposed to heat for prolonged or repeated periods of time.

In accordance with the present invention there is provided use of a stabilising composition to stabilise a polyolefin or a hot melt adhesive, the stabilising composition comprising:
a. at least one antioxidant comprising one or more of:
   i. a phenolic antioxidant;
   ii. a phosphite antioxidant;
   iii. a sulphur-containing antioxidant; and
   iv. an aminic antioxidant; and
b. at least one buffering agent,
   wherein the buffering agent has the capacity to buffer in aqueous solution at a pH range from 4 to 8, and wherein the buffering agent is a solid at a temperature of 50°C or lower.

The inventors of the present invention have surprisingly found that the presence of a buffering agent having the capacity to buffer in aqueous solution at a pH range from 4 to 8, significantly improves the colour stability of a wide range of polymers, even during prolonged or repeated heat exposure. In addition, it has been found that the polymer to which the stabilising composition is added retains its melt flow properties and viscosity, even during prolonged or repeated heat exposure. Melt flow properties can be determined using the ASTM D4499-07 test method.

The improved colour stability and retention of melt flow properties and viscosity during prolonged exposure to heat is advantageous since polymers are often kept in a molten state for prolonged periods of time during production and prior to use in an application. This may particularly be the case when the polymer is a polyolefin and/or is used in a hot melt adhesive application.

By 'prolonged heat exposure' we preferably mean exposure to a temperature of at least about 100°C, at least about 110°C, at least about 120°C, at least about 130°C, at least about 140°C, at least about 150°C, at least about 160°C, at least about 170°C, at least about 180°C, at least about 190°C, at least about 200°C, at least about 210°C, at least about 220°C, at least about 230°C, at least about 240°C or at least about 250°C, for at least about 1 hour, at least about 2 hours, at least about 4 hours, at least about 6 hours, at least about 12 hours, at least about 24 hours, at least about 36 hours, at least about 48 hours, at least about 3 days, at least about 4 days, at least about 5 days, at least about 6 days, at least about 7 days, at least about 10 days or at least about 14 days.

By 'repeated heat exposure' we preferably mean exposure to a temperature of at least about 100°C, at least about 150°C, at least about 200°C, at least about 250°C, or at least about 300°C, on more than one occasion, for at least about 5 seconds, at least about 10 seconds, at least about 20 seconds, at least about 30 seconds, at least about 1 minute, at least about 5 minutes, or at least about 10 minutes. Repeated heat exposure may be experienced during multiple passes through an extruder.

It has surprisingly been found that the buffering agent of the present invention exceeds the performance of acid scavengers conventionally used in the art, for example dihydrotalcite (DHT) and stearate salts such as calcium stearate, zinc stearate, aluminium stearate, magnesium stearate and sodium stearate. Thus, the buffering agent of the present invention can be used to replace conventional acid scavengers.

The inventors of the present invention have unexpectedly found that buffering agents which have the capacity to buffer in aqueous solution at a pH range from 4 to 8 are advantageous.

Without wishing to be bound by any such theory, the inventors of the present invention believe that buffering agents which buffer in aqueous solution at a pH of less than 4 may promote an acidic environment which may cause autocatalytic hydrolysis of the antioxidant, particularly where the antioxidant is a phosphite antioxidant. Acid scavengers which simply act to increase the pH of the composition to a pH of greater than 8, for example calcium hydroxide and potassium carbonate, may cause increased colour formation due to the interaction with the antioxidant, particularly where the antioxidant is a phenolic antioxidant.

Conversely, buffering agents of the present invention which buffer in aqueous solution at a pH range from 4 to 8 have been found not to unfavourably interact with the other antioxidants in the stabilising composition.

The buffering agent is a solid at ambient conditions. In this context, by ambient conditions' we mean a temperature of 50°C or lower, a temperature of 40°C or lower, a temperature of 30°C or lower, or a temperature of 25°C or lower, and 1 atmosphere pressure i.e. 101.325 kPa.

It is particularly preferred for the buffering agent to be a solid at a temperature of 25°C and 1 atmosphere pressure i.e. 101.325 kPa.

The inventors of the present invention have found that a solid buffering agent can be used in the stabilising composition. This is surprising as it was previously assumed that a solid buffering agent would not be soluble in the polymer to which it was added. Hence buffering agents of the prior art tended to be used as aqueous solutions. Providing the buffering agent as a solid provides handling benefits during processing as the solid buffering agent can be compounded into the polymer. Dissolution in water which is immiscible with the polymer would make compounding into the polymer much more difficult or impossible.

In some instances, it may be preferable for the buffering agent to have a relatively low molecular weight, as this results in a greater relative molar quantity of buffering agent in the stabilising composition. Preferably, the buffering agent has a molecular weight of less than about 500. The buffering agent may have a molecular weight of less than about 450, less than about 400, or less than about 350.

The buffering agent may comprise one or more metal phosphates and/or one or more metal pyrophosphates.

The metal phosphate and/or metal pyrophosphate may comprise an alkali metal phosphate or alkali metal pyrophosphate.

The alkali metal phosphate may be selected from compounds with the following formulas: MPO₄H₂, M₂PO₄H and M₃PO₄, wherein M is an alkali metal cation. The alkali metal cation 'M' may be selected from lithium (Li), sodium (Na), and potassium (K).

The alkali metal pyrophosphate may be selected from compounds with the following formulas: MP₂O₇H₃, M₂P₂O₇H₂, M₃P₂O₇H and M₄P₂O₇, wherein M is an alkali metal cation. The alkali metal cation 'M' may be selected from lithium (Li), sodium (Na), and potassium (K).

The buffering agent may comprise a mixture of two or more metal phosphates and/or metal pyrophosphates.

Preferably, the buffering agent comprises a mixture of two or more alkali metal phosphates. More preferably, the buffering agent comprises a mixture of at least one monobasic alkali metal phosphate (i.e. MPO₄H₂) and at least one dibasic alkali metal phosphate (i.e. M₂PO₄H), for example a mixture of monosodium phosphate (NaPO₄H₂) and disodium phosphate (Na₂PO₄H).

Where the buffering agent comprises a mixture of at least one monobasic alkali metal phosphate and at least one dibasic alkali metal phosphate, the weight ratio of the monobasic component to the dibasic component (MONO:DI) may be from 10:90 to 95:5, or from 10:90 to 90:10, or from 20:80 to 80:20, or from 30:70 to 70:30, or from 40:60 to 60:40. Preferably, the MONO:DI ratio is from 1:2 to 2:1, for example 1:1.

Suitable selection of combinations of buffering agents can ensure that buffering takes place in the required pH range. For example, a 1:1 mixture of monosodium phosphate (NaPO₄H₂) and disodium phosphate (Na₂PO₄H) will buffer at a pH of about 7.2.

Additionally or alternatively, the buffering agent may comprise one or more amino acids and/or the alkali metal salts thereof.

The amino acid and/or the alkali metal salt thereof may be naturally derived or synthetically derived. The amino acid and/or the alkali metal salt thereof may comprise glycine, cysteine, cystine, methionine, tyrosine, histidine, arginine and/or glutamic acid.

One particularly preferred amino acid alkali metal salt is monosodium glutamate.

The buffering agent may be present in an amount of from about 1% to about 50% by weight of the stabilising composition, for example from about 1% to about 40% by weight of the stabilising composition, from about 1% to about 30% by weight of the stabilising composition, or from about 1% to about 20% by weight of the stabilising composition. Preferably, the buffering agent is present in an amount of from about 5% to about 15% by weight of the stabilising composition, for example in an amount of from about 8% to about 12% by weight of the stabilising composition.

The stabilising composition may additionally comprise a secondary inorganic antioxidant.

For example, the stabilising composition may comprise:
a. at least one antioxidant comprising one or more of:
   i. a phenolic antioxidant;
   ii. a phosphite antioxidant;
   iii. a sulphur-containing antioxidant; and
   iv. an aminic antioxidant;
b. at least one buffering agent; and
c. a secondary inorganic antioxidant,
   wherein the buffering agent has the capacity to buffer in aqueous solution at a pH range from 4 to 8, and wherein the buffering agent is a solid at a temperature of 50°C or lower.

The secondary inorganic antioxidant may comprise one or more of a metal hypophosphite, a metal thiosulphate, a metal bisulphite, a metal metabisulphite and/or a metal hydrosulphite.

The metal of the hypophosphite, thiosulphate, bisulphite, metabisulphite and/or hydrosulphite may be an alkali metal and/or an alkaline earth metal. The alkali metal may be selected from lithium (Li), sodium (Na), and potassium (K). The alkaline earth metal may be selected from calcium (Ca) and magnesium (Mg).

The metal hypophosphite may be selected from compounds with the formula: MPO₂H₂. The metal thiosulphate may be selected from compounds with the formula: M₂S₂O₃. The metal bisulphite may be selected from compounds with the formula: MHSO₃. The metal metabisulphite may be selected from compounds with the formula: M₂S₂O₅. The metal hydrosulphite may be selected from compounds with the formula: M₂S₂O₄. In each case, M is an alkali metal cation. The alkali metal cation may be selected from lithium (Li), sodium (Na), and potassium (K).

The metal hypophosphite may be in anhydrous form i.e. an anhydrous metal hypophosphite. Alternatively, the metal hypophosphite may be in hydrated form i.e. a hydrated metal hypophosphite, for example a monohydrate metal hypophosphite. As well as hypophosphites there may also be mentioned as being suitable for use in the invention thiosulphates, bisulphites, metabisulphites and hydrosulphites. These may all be provided as for example metal salts such as alkali metal salts. As with metal hypophosphites these may be provided in anhydrous form or as hydrates. For example, penta-hydrates of thiosulphate and dihydrates of hydrosulphite may be mentioned and other suitable materials may be apparent to the skilled addressee.

The inventors of the present invention have surprisingly found that a stabilising composition with a hydrated metal hypophosphite, for example a monohydrate metal hypophosphite, performs comparably to, and in some instances better than, a stabilising composition with the anhydrous form of the metal hypophosphite at the same phosphorous loading, particularly with respect to the colour stability and/or melt flow properties of the polymer to which the stabilising composition is added.

It may be advantageous to use the hydrated form of the metal hypophosphite as it tends to be cheaper than the anhydrous form.

In addition, it has unexpectedly been found that when the stabilising composition comprises a phosphite antioxidant, using the hydrated form of the metal hypophosphite may result in better performance with respect to colour stability of the polymer to which the stabilising composition is added.

Without wishing to be bound by any such theory, it is believed that water molecules present in the hydrated form of the metal hypophosphite may partially hydrolyse the phosphite antioxidant and consequently reduce discolouration in the polymer.

The weight ratio of the buffering agent to the secondary inorganic antioxidant may be from 5:95 to 95:5, or from 10:90 to 90:10, or from 20:80 to 80:20, or from 30:70 to 70:30, or from 40:60 to 60:40. Preferably, the weight ratio of the buffering agent to the secondary inorganic antioxidant is from 1:2 to 2:1, for example 1:1.

It may be preferable for the secondary inorganic antioxidant to comprise a metal hypophosphite and be used in conjunction with a buffering agent comprising one or more metal phosphates and/or metal pyrophosphates.

For example, a preferred stabilising composition may comprise:
a. at least one antioxidant comprising one or more of:
   i. a phenolic antioxidant;
   ii. a phosphite antioxidant;
   iii. a sulphur-containing antioxidant; and
   iv. an aminic antioxidant;
b. at least one buffering agent; and
c. a metal hypophosphite,
wherein the buffering agent comprises one or more metal phosphates and/or metal pyrophosphates, wherein the buffering agent has the capacity to buffer in aqueous solution at a pH range from 4 to 8, and wherein the buffering agent is a solid at a temperature of 50°C or lower.

The stabilising composition of the present invention comprises at least one antioxidant comprising one or more of a phenolic antioxidant; a phosphite antioxidant; a sulphur-containing antioxidant; and an aminic antioxidant.

The phenolic antioxidant may comprise a semi-hindered or a hindered phenolic antioxidant.

In this specification by "hindered" we preferably mean that the phenolic antioxidant comprises substituent hydrocarbyl groups on both positions ortho to the phenolic-OH group, each of those substituent groups being branched at the C₁ and/or C₂ position, preferably at the C₁ position, with respect to the aromatic ring.

In this specification by "semi-hindered" we preferably mean that the phenolic antioxidant comprises at least one substituent hydrocarbyl group ortho to the phenolic -OH group, only one of the or each substituent group being branched at the C₁ and/or C₂ position, preferably at the C₁ position, with respect to the aromatic ring.

The semi-hindered phenolic antioxidant may comprise 1,3,5-tris(4-tert-butyl-3-hydroxy-2,6-dimethylbenzyl)-1,3,5-triazine-2,4,6-(1H, 3H, 5H)-trione (LOWINOX^{™} 1790 - CAS 40601-76-1); triethyleneglycol-bis-[3-(3-t-butyl-4-hydroxy-5-methylphenyl)propionate] (LOWINOX^{™} GP45 - CAS 36443-68-2); the butylated reaction product of p-cresol and dicyclopentadiene (LOWINOX^{™} CPL - CAS 68610-51-5); 2,2'methylenebis(6-t-butyl-4-methylphenol) (LOWINOX^{™} 22M46 - CAS 119-47-1); and/or compatible mixtures of two or more thereof.

The hindered phenolic antioxidant may comprise tetrakismethylene(3,5-di-t-butyl-4-hydroxyhydrocinnamate) methane (ANOX^{™} 20 - CAS 6683-19-8); 2,2'thiodiethylene bis[3(3,5-di-t-butyl-4-hydroxyphenyl)propionate] (ANOX^{™} 70 - CAS 41484-35-9); C13-C15 linear and branched alkyl esters of 3-(3'5'-di-t-butyl-4'-hydroxyphenyl) propionic acid (ANOX^{™} 1315 - CAS 171090-93-0); octadecyl 3-(3',5'-di-t-butyl-4'-hydroxyphenyl) propionate (ANOX^{™} PP18 - CAS 2082-79-3); 1,3,5-tris(3,5-di-t-butyl-4-hydroxybenzyl) isocyanurate (ANOX^{™} IC14 - CAS 27676-62-6); 1,3,5-trimethyl-2,4,6-tris(3,5-di-t-butyl-4-hydroxybenzyl)benzene (ANOX^{™} 330 - CAS 1709-70-2); N,N'-hexamethylenebis[3-(3,5-di-t-butyl-4-hydroxyphenyl)propionamide] (LOWINOX^{™} HD98 - CAS 23128-74-7); 1,2-bis(3,5-di-t-butyl-4-hydroxyhydrocinnamoyl)hydrazine (LOWINOX^{™} MD24 - CAS 32687-78-8); C9-C11 linear and branched alkyl esters of 3-(3',5'-di-t-butyl-4'-hydroxyphenyl)propionic acid (NAUGARD PS48^{™} - CAS 125643-61-0); 2,2'-ethylidenebis[4,6-di-t-butylphenol] (ANOX^{™} 29 - CAS 35958-30-6); butylated hydroxytoluene (BHT - CAS 128-37-0); and/or compatible mixtures of two or more thereof.

One particularly preferred phenolic antioxidant comprises tetrakismethylene (3,5-di-t-butyl-4-hydroxyhydrocinnamate) methane (ANOX^{™} 20 - CAS 6683-19-8).

The phenolic antioxidant may be present in an amount of from about 1% to about 50% by weight of the stabilising composition, for example from about 5% to about 45% by weight of the stabilising composition, from about 10% to about 40% by weight of the stabilising composition, or from about 15% to about 35% by weight of the stabilising composition.

The phosphite antioxidant may comprise an organophosphite antioxidant.

The organophosphite antioxidant may comprise bis(2,4,di-t-butylphenyl)pentraerythritol diphosphite (ULTRANOX^{™} 626 - CAS 26741-53-7); 2,4,6-tri-tert-butylphenyl-2-butyl-2-ethyl-1,3-propanediol phosphite (ULTRANOX^{™} 641 - CAS 161717-32-4); tris(2,4-di-t-butylphenyl)phosphite (ALKANOX^{™} 240 - CAS 31570-04-4); tetrakis (2,4-di-t-butylphenyl)4,4'-biphenylene diphosphonite (ALKANOX^{RTM} 24-44 - CAS 38613-77-3); tris(4-n-nonylphenyl)phosphite (WESTON^{™} TNPP - CAS 26523-78-4); distearylpentaerythritol diphosphite (WESTON^{™} 618 - CAS 3806-34-6); bis(2,4-dicumylphenyl) pentaerythritol diphosphite (DOVERPHOS^{™} 9228 - CAS 154862-43-8); WESTON^{™} 705 - CAS 939402-02-5; tris(dipropyleneglycol) phosphite, C₁₈H₃₉O₉P (WESTON^{™} 430 - CAS 36788-39-3); poly(dipropylene glycol) phenyl phosphite (WESTON^{™} DHOP - CAS 80584-86-7); diphenyl isodecyl phosphite, C₂₂H₃₁O₃P (WESTON^{™} DPDP - CAS 26544-23-0); phenyl diisodecyl phosphite (WESTON^{™} PDDP - CAS 25550-98-5); heptakis (dipropyleneglycol) triphosphite (WESTON^{™} PTP - CAS 13474-96-9); bis(2,6-di-ter-butyl-4-methylphenyl)pentaerythritol diphosphite (PEP 36 - CAS 80693-00-1); and/or compatible mixtures of two or more thereof.

One particularly preferred phosphite antioxidant comprises tris(2,4-di-t-butylphenyl)phosphite (ALKANOX^{™} 240 - CAS 31570-04-4).

The phosphite antioxidant may be present in an amount of from about 20% to about 90% by weight of the stabilising composition. For example, the phosphite antioxidant may be present in an amount of from about 25% to about 85% by weight of the stabilising composition, from about 30% to about 80% by weight of the stabilising composition, from about 35% to about 75% by weight of the stabilising composition, from about 40% to about 70% by weight of the stabilising composition, or from about 40% to about 60% by weight of the stabilising composition.

The sulphur-containing antioxidant may have a sulphur group with the formula -CH₂-(S)ₓ-CH₂-, wherein x = 1 or 2, and optionally wherein neither of the -CH₂- groups is directly bonded to an aromatic group.

Such stabilising components may have a greater stabilising effect compared to a stabilising composition comprising a sulphur-containing antioxidant wherein one or both of the -CH₂- groups is directly bonded to an aromatic group, or wherein one or both of the sulphur atoms are directly bonded to an aromatic group, for example 2,4-bis-(n-octylthio)-6-(4-hydroxy-3,5-di-tert-butylanilino)-1,3,5-triazine (IRGANOX^{™} 565 - CAS 991-84-4).

The sulphur-containing antioxidant may have the formula R-CH₂-(S)ₓ-CH₂-R, wherein x = 1 or 2, and wherein the or each R group, which may be the same or different, is or contains, independently, an aliphatic group. Where more than one such aliphatic group is present in either or each R group, the aliphatic groups may be the same or different.

The, each or any aliphatic group may be straight chain or branched chain and may be substituted with one or more functional groups.

The sulphur-containing antioxidant may comprise one or more thioether groups and one or more ester groups.

For example, the sulphur-containing antioxidant may comprise dilauryl-3,3'-thiodipropionate (NAUGARD^{™} DLTDP - CAS 123-28-4); distearyl-3,3'-thiodipropionate (NAUGARD^{™} DSTDP - CAS 693-36-7); ditridecylthiodipropionate (NAUGARD^{™} DTDTDP (liquid) CAS - 10595-72-9); pentaerythritol tetrakis (β-laurylthiopropionate) (NAUGARD^{™} 412S - CAS 29598-76-3); 2,2'thiodiethylene bis[3(3,5-di-t-butyl-4-hydroxyphenyl)propionate] (ANOX^{™} 70 - CAS 41484-35-9); dimyristyl thiodipropionate (CYANOX^{™} MTDP - CAS 16545-54-3); distearyl-disulfide (HOSTANOX^{™} SE 10 - CAS 2500-88-1); ADK STAB AO-23 (CAS 77538-55-7); and/or compatible mixtures of two or more thereof.

One particularly preferred sulphur-containing antioxidant comprises pentaerythritol tetrakis (β-lauryithiopropionate) (NAUGARD^{™} 412S - CAS 29598-76-3).

Additionally or alternatively, the sulphur-containing antioxidant may comprise one or more diphenyl thioethers, for example 2,2'-methylenebis(6-t-butyl-4-methylphenol) (LOWINOX^{™} TBM-6 - CAS 96-69-5); and/or 2,2'-thiobis(6-t-butyl-4-methylphenol) (LOWINOX^{™} TBP-6 - CAS 90-66-4).

The sulphur-containing antioxidant may be present in an amount of from about 1% to about 50% by weight of the stabilising composition, for example from about 1% to about 40% by weight of the stabilising composition, from about 1% to about 30% by weight of the stabilising composition, or from about 1% to about 20% by weight of the stabilising composition. The sulphur-containing antioxidant may be present in an amount of from about 5% to about 15% by weight of the stabilising composition, for example in an amount of from about 8% to about 12% by weight of the stabilising composition.

The aminic antioxidant may comprise acetone diphenylamine (AMINOX^{™} - CAS 68412-48-6); reaction products of diphenylamine and acetone (BLE^{™} - CAS 112-39-4); N,N'-diphenyl-p-phenylenediamine (FLEXAMINE^{™} - CAS 74-31-7); benzeneamine, N-phenyl-, reaction products with 2,4,4-trimethylpentene (NAUGARD^{™} PS30 - CAS 68411-46-1); bis[4-(2-phenyl-2-propyl)phenyl]amine (NAUGARD^{™} 445 - CAS 10081-67-1); poly(1,2-dihydro-2,2,4-trimethylquinoline) (NAUGARD^{™} Q - CAS 26780-96-1); dioctyldiphenylamine (OCTAMINE^{™} - CAS 101-67-7); N,N-bis-(1,4-dimethylpentyl)-p-phenylenediamine (FLEXZONE^{™} 4L - CAS 3081-14-9); 1,4-benzenediamine, N,N'-mixed phenyl and tolyl derivatives (NOVAZONE^{™} AS - CAS 68953-84-4); N,N',N"-tris[4-[(1,4-dimethylpentyl)amino]phenyl]-1,3,5-triazine-2,4,6-triamine (DURAZONE^{™} 37 - CAS 121246-28-4); N-isopropyl-N'-phenyl-1,4-phenylenediamine (FLEXZONE^{™} 3C - CAS 101-72-4); diphenylamine (CAS 122-39-4); (1,3-dimethylbutyl)-N'-phenyl-p-phenylenediamine (CAS 793-24-8); poly(4-hydroxy-2,2,6,6-tetramethyl-1-piperidine ethanol-alt-1,4-butanedioic acid) (LOWILITE^{™} 62 - CAS 65447-77-0); bis(2,2,6,6-tetramethyl-4-piperidyl) sebacate (LOWILITE^{™} 77 - CAS 52829-07-9); bis(1,2,2,6,6-pentamethyl-4-piperidyl) sebacate (LOWILITE^{™} 92 - CAS 41556-26-7); poly[[6-[(1,1,3,3-tetramethylbutyl)amino]-1,3,5-triazine-2,4-diyl][2,2,6,6-tetramethyl-4-piperidiyl)imino]-1,6-hexanediyl[(2,2,6,6-tetramethyl-4-piperidiyl)imino]]) (LOWILITE^{™} 94 - CAS 70624-18-9); 1,5,8,12-tetrakis[4,6-bis(N-butyl-N-1,2,2,6,6-pentamethyl-4-piperidylamino)-1,3,5-triazin-2-yl]-1,5,8,12-tetraazadodecane (LOWILITE^{™} 19 - CAS 106990-43-6); and/or compatible mixtures of two or more thereof, for example.

The antioxidant may comprise a phenolic antioxidant and a phosphite antioxidant. For example the antioxidant may comprise tetrakismethylene (3,5-di-t-butyl-4-hydroxyhydrocinnamate) methane (ANOX^{™} 20 - CAS 6683-19-8); and tris(2,4-di-t-butylphenyl)phosphite (ALKANOX^{™} 240 - CAS 31570-04-4). Such an antioxidant may be particularly good for stabilising polyolefins.

The antioxidant may comprise a phenolic antioxidant, a phosphite antioxidant and a sulphur-containing antioxidant. For example, the antioxidant may comprise tetrakismethylene (3,5-di-t-butyl-4-hydroxyhydrocinnamate) methane (ANOX^{™} 20 - CAS 6683-19-8); tris(2,4-di-t-butylphenyl)phosphite (ALKANOX^{™} 240 - CAS 31570-04-4) and tetrakis (β-lauryithiopropionate) (NAUGARD^{™} 412S - CAS 29598-76-3). Such an antioxidant may be particularly good for stabilising hot melt adhesives.

A preferred stabilising composition may comprise:
tetrakismethylene (3,5-di-t-butyl-4-hydroxyhydrocinnamate) methane (ANOX^{™} 20 - CAS 6683-19-8);
tris(2,4-di-t-butylphenyl)phosphite (ALKANOX^{™} 240 - CAS 31570-04-4);
a mixture of monosodium phosphate (CAS 7558-80-7) and disodium phosphate (CAS 7558-79-4); and
sodium hypophosphite (CAS 7681-53-0).

Such a stabilising composition may be particularly good for stabilising polyolefins.

Another preferred stabilising composition may comprise:
tetrakismethylene (3,5-di-t-butyl-4-hydroxyhydrocinnamate) methane (ANOX^{™} 20 - CAS 6683-19-8);
tris(2,4-di-t-butylphenyl)phosphite (ALKANOX^{™} 240 - CAS 31570-04-4);
tetrakis (β-lauryithiopropionate) (NAUGARD^{™} 412S - CAS 29598-76-3);
a mixture of monosodium phosphate (CAS 7558-80-7) and disodium phosphate (CAS 7558-79-4); and
sodium thiosulphate (CAS 7772-98-7).

Such a stabilising composition may be particularly good for stabilising hot melt adhesives.

Another preferred stabilising composition may comprise:
tetrakismethylene (3,5-di-t-butyl-4-hydroxyhydrocinnamate) methane (ANOX^{™} 20 - CAS 6683-19-8);
tris(2,4-di-t-butylphenyl)phosphite (ALKANOX^{™} 240 - CAS 31570-04-4);
tetrakis (β-lauryithiopropionate) (NAUGARD^{™} 412S - CAS 29598-76-3); and
monosodium glutamate (CAS 142-47-2).

Such a stabilising composition may be particularly good for stabilising hot melt adhesives.

Additional antioxidants, for example hydroxylamines or precursors thereof, lactone radical scavengers, acrylate radical scavengers, UV absorbers and/or chelating agents, may be included in the stabilising composition.

Also provided in accordance with the present invention is a stabilised polymeric composition comprising a polymeric base material and a stabilising composition comprising:
a. at least one antioxidant comprising one or more of:
   i. a phenolic antioxidant;
   ii. a phosphite antioxidant;
   iii. a sulphur-containing antioxidant; and
   iv. an aminic antioxidant; and
b. at least one buffering agent,
wherein the buffering agent has the capacity to buffer in aqueous solution at a pH range from 4 to 8, wherein the buffering agent is a solid at a temperature of 50°C or lower, and wherein the polymeric base material comprises a polyolefin or a hot melt adhesive.

The stabilising composition may be present in the stabilised polymeric composition in an amount of from about 0.01% to about 5% by weight of the stabilised polymeric composition. Preferably, the stabilising composition is present in an amount of from about 0.01% to about 2% by weight of the stabilised polymeric composition, for example from about 0.1% to about 1.5% by weight of the stabilised polymeric composition.

The polymeric base material may comprise a polyolefin. The polyolefin may comprise a homopolymer of ethylene, propylene, butylene or a higher alkene. The ethylene homopolymer may comprise low density polyethylene (LDPE), linear low density polyethylene (LLDPE) and/or high density polyethylene (HDPE). The propylene homopolymer may be isotactic, syndiotactic or atactic.

Additionally or alternatively, the polyolefin may comprise a copolymer of ethylene, propylene and/or butylene. The copolymer may be a random copolymer or a block copolymer. For example, the polyolefin may comprise an ethylene/propylene block copolymer, an ethylene/propylene random copolymer, an ethylene/propylene/butylene random terpolymer or an ethylene/propylene/butylene block terpolymer.

Preferably the polyolefin comprises ethylene and/or propylene.

Additionally or alternatively, the polymeric base material may comprise a styrenic block copolymer, for example styrene-butadiene-styrene (SBS), styrene-isoprene-styrene (SIS), styrene-ethylene/butylene-styrene (SEBS), styrene-ethylene/propylene (SEP) and styrene-butadiene rubber (SBR); or suitable mixtures and blends thereof. Additionally or alternatively, the polymeric base material may comprise an ethylene vinyl acetate polymer, for example EVA.

The polymeric base material as hereinbefore described may be a hot melt adhesive.

For the avoidance of doubt, all features relating to the stabilising composition of the present invention also relate, where appropriate, to the stabilised polymeric composition of the present invention and *vice versa.*

The invention will now be more particularly described with reference to the following non-limiting examples.

### EXAMPLES

### 1. STABILISATION OF A HOT MELT ADHESIVE

### Preparing the Stabilised Composition

A hot melt adhesive was prepared from the appropriate amounts of metallocene polyolefin polymer base material, tackifier resin, wax and oil.

Numerous stabilising compositions were prepared.

Table 1 shows the different components that were used in the stabilising compositions.

**TABLE 1**

| **Component** | **Shorthand** | **Type** |
|---|---|---|
| ANOX^{™} 20 | A20 | Phenolic antioxidant |
| ALKANOX^{™} 240 | A240 | Phosphite antioxidant |
| NAUGARD^{™} 412S | N412S | Sulphur-containing antioxidant |
| Monosodium glutamate | MSG | Buffering agent |
| Cysteine | Cys | Buffering agent |
| Cystine | Cystine | Buffering agent |
| Methionine | Met | Buffering agent |
| Arginine | Arg | Buffering agent |
| Histidine | His | Buffering agent |
| Tyrosine | Tyr | Buffering agent |
| Potassium acetate | KOAc | Acid scavenger |
| Potassium carbonate | K₂CO₃ | Acid scavenger |
| 1:1 NaH₂PO₄:Na₂HPO₄ | Na P | Buffering agent |
| 1:1 KH₂PO₄/K₂HPO₄ | KP | Buffering agent |

Table 2 shows the various stabilising compositions that were prepared. The % amounts shown in the table are % by weight of the overall hot melt adhesive composition. Samples 1, 12 and 13 were comparative samples.

**TABLE 2**

| **Sample** | **A20 (%)** | **A240 (%)** | **N412S (%)** | **Buffering Agent/Acid Scavenger** | | **Total (%)** |
|---|---|---|---|---|---|---|
| | | | | **Identity** | **%** | |
| **1 (Comp)** | 0.500 | - | - | - | - | 0.500 |
| **2** | 0.050 | 0.400 | - | Cys | 0.050 | 0.500 |
| **3** | 0.050 | 0.400 | 0.025 | Cys | 0.025 | 0.500 |
| **4** | 0.050 | 0.375 | 0.050 | MSG | 0.025 | 0.500 |
| **5** | 0.050 | 0.400 | - | Cystine | 0.050 | 0.500 |
| **6** | 0.050 | 0.400 | - | Met | 0.050 | 0.500 |
| **7** | 0.050 | 0.375 | 0.050 | Arg | 0.025 | 0.500 |
| **8** | 0.050 | 0.375 | 0.050 | His | 0.025 | 0.500 |
| **9** | 0.050 | 0.375 | 0.050 | Tyr | 0.025 | 0.500 |
| **10** | 0.050 | 0.375 | 0.050 | MSG | 0.025 | 0.500 |
| **11** | 0.050 | 0.350 | 0.050 | MSG | 0.050 | 0.500 |
| **12 (Comp)** | 0.050 | 0.350 | 0.050 | KOAc | 0.050 | 0.500 |
| **13 (Comp)** | 0.050 | 0.350 | 0.050 | K₂CO₃ | 0.050 | 0.500 |
| **14** | 0.050 | 0.350 | 0.050 | Na P | 0.050 | 0.500 |
| **15** | 0.050 | 0.350 | 0.050 | KP | 0.050 | 0.500 |

Each of the above-identified stabilising compositions were added to a sample of the hot melt adhesive in an amount of 0.5% by weight of the hot melt adhesive.

The mixture was then heated at 170°C for 30 minutes to melt the mixture before being heated in an oil bath at 160°C for 30 minutes whilst stirring with an overhead stirrer to ensure intimate mixing of the hot melt adhesive with the stabilising composition.

### Colour Retention and Dynamic Viscosity

Approximately 10 g of the molten hot melt adhesive mixture was poured into each of six test tubes. One test tube was retained as the T = 0 hours condition i.e. with no heat aging. The remaining five test tubes were heated in a fan oven (Thermo OMH180 with fan speed 1) at 170°C. A test tube was removed from the oven after 24 hours, 48 hours, 72 hours, 96 hours and 120 hours, and the colour of the sample assessed at 180°C in a Lovibond^{™} Comparator 3000 using the Gardner Colour Scale.

Overall, the colour development of each sample was assessed over five days heat aging. Sample 1 represents an industry standard control antioxidant.

The results are shown in Table 3 below.

**TABLE 3**

| **Sample** | **T = 0 h** | **T = 24 h** | **T = 48 h** | **T = 72 h** | **T = 96 h** | **T = 120 h** |
|---|---|---|---|---|---|---|
| **1 (Comp)** | <1 | 2.5 | 4.5 | 6.5 | 10.0 | 11.5 |
| **2** | <1 | 3.0 | 5.0 | 7.5 | 11.5 | 12.0 |
| **3** | <1 | 2.5 | 4.5 | 5.5 | 8.5 | 11.0 |
| **4** | <1 | 1.5 | 2.5 | 3.0 | 3.0 | 4.0 |
| **5** | <1 | 3.0 | 8.0 | 13.0 | 13.5 | 14.5 |
| **6** | <1 | 2.0 | 6.0 | 11.5 | 12.0 | 12.5 |
| **7** | <1 | 3.5 | 4.5 | 5.0 | 8.0 | 12.0 |
| **8** | <1 | 3.0 | 3.0 | 4.0 | 4.5 | 5.5 |
| **9** | <1 | 3.5 | 4.0 | 4.5 | 5.5 | 7.0 |
| **10** | <1 | 2.0 | 3.0 | 3.0 | 4.0 | 4.5 |
| **11** | <1 | 2.5 | 3.0 | 3.0 | 4.5 | 4.0 |
| **12 (Comp)** | <1 | 2.0 | 3.0 | 3.5 | 4.0 | 4.0 |
| **13 (Comp)** | <1 | 3.0 | 4.0 | 4.0 | 4.0 | 3.5 |
| **14** | <1 | <1 | <1 | 1.0 | 2.0 | 2.5 |
| **15** | <1 | 2.0 | 2.0 | 2.0 | 2.5 | 4.0 |

The above results show the performance of the sample stabilising compositions during a prolonged period of heat aging. The lower the number recorded for colour development, the better the heat aging performance of the stabilising composition.

Sample 1 acted as a typical industry standard antioxidant. As can be seen from the results, the stabilising compositions in accordance with the present invention performed comparably or showed an improvement over the industry standard sample. In particular, samples 4, 8 to 11, 14 and 15 all showed a significant improvement in heat aging performance over the industry standard sample. Sample 14 showed extremely good heat aging performance, with no discernible colour formation up to 48 hours.

For each of the samples, the retention in dynamic viscosity was also assessed. Measurements of dynamic viscosity were taken at T = 0 hours and T = 120 hours using a Brookfield LV DV2T at a temperature of 160°C via a single point test. The retention in dynamic viscosity was then calculated as the % ratio of the viscosity at T = 120 divided by the viscosity at T = 0

The results are shown in Table 4 below.

**TABLE 4**

| **Sample** | **Dynamic Viscosity retained after T = 120 h (%)** |
|---|---|
| **1 (Comp)** | 97.7 |
| **2** | 99.8 |
| **3** | 101.8 |
| **4** | 100.1 |
| **5** | 100.2 |
| **6** | 102.1 |
| **7** | 112.5 |
| **8** | 103.7 |
| **9** | 98.7 |
| **10** | 119.0 |
| **11** | 107.8 |
| **12 (Comp)** | 105.5 |
| **13 (Comp)** | 99.7 |
| **14** | 112.2 |
| **15** | 114.2 |

The above results show the retention of dynamic viscosity of the sample stabilising compositions after a prolonged period of heat aging. A reduction in dynamic viscosity i.e. a value of less than 100%, is indicative of oxidative degradation in the sample. This may be detrimental to the performance of the hot melt adhesive. An increase in dynamic viscosity is not considered detrimental to the performance of the hot melt adhesive.

Sample 1 acted as a typical industry standard antioxidant. As can be seen from the results, the stabilising compositions in accordance with the present invention performed comparably or showed an improvement over the industry standard sample. In particular, samples 3 to 8, 10, 11, 14 and 15 all showed an improvement in dynamic viscosity retention over the industry standard sample.

### 2. STABILISATION OF A POLYOLEFIN

### Preparing the Stabilised Composition

The polyolefin base material was polypropylene.

Numerous stabilising compositions were prepared.

Table 5 shows the different components that were used in the stabilising compositions.

**TABLE 5**

| **Component** | **Shorthand** | **Type** |
|---|---|---|
| ANOX^{™} 20 | A20 | Phenolic antioxidant |
| ALKANOX^{™} 240 | A240 | Phosphite antioxidant |
| ULTRANOX^{™} 626 | U626 | Phosphite antioxidant |
| Calcium stearate | CaSt | Acid scavenger |
| Dihydrotalcite | DHT | Acid scavenger |
| Sodium hypophosphite (anhydrous) | Na Hyp | Secondary inorganic antioxidant |
| 1:1 NaH₂PO₄:Na₂HPO₄ | Na P | Buffering agent |

Table 6 shows the various stabilising compositions that were prepared. The % amounts shown in the table are % by weight of the overall polypropylene composition. Samples 16, 20 and 21 were comparative samples.

**TABLE 6**

| **Sample** | **A20 (%)** | **A240 (%)** | **U626 (%)** | **CaSt (%)** | **DHT (%)** | **Na Hyp (%)** | **Na P (%)** | **Total (%)** |
|---|---|---|---|---|---|---|---|---|
| **16 (Comp)** | 0.04 | 0.08 | - | 0.03 | - | - | - | 0.15 |
| **17** | 0.04 | 0.08 | - | - | - | 0.01 | 0.02 | 0.15 |
| **18** | 0.04 | 0.08 | - | - | - | 0.015 | 0.015 | 0.15 |
| **19** | 0.04 | 0.08 | - | - | - | 0.02 | 0.01 | 0.15 |
| **20 (Comp)** | 0.04 | 0.08 | - | - | 0.018 | - | - | 0.138 |
| **21 (Comp)** | 0.08 | - | 0.08 | - | - | - | - | 0.16 |
| **22** | 0.08 | - | 0.08 | - | - | 0.015 | 0.015 | 0.19 |

Each of the samples was compounded with the polypropylene base material in an extruder at 230°C under nitrogen to form a polypropylene composition.

### Colour Stability and Melt Flow Rate

Each of the polypropylene compositions was multi-passed through the extruder at 260°C under air. The discolouration of the compositions was measured in terms of Yellowness Index (YI) using a colorimeter. YI values were taken following compounding (pass 0) and after pass 1, 3 and 5. The lower the YI value, the less discolouration of the composition. The results are shown in Table 7.

**TABLE 7**

| **Sample** | **YI Value** | | | |
|---|---|---|---|---|
| | **Pass 0** | **Pass 1** | **Pass 3** | **Pass 5** |
| **16 (Comp)** | 0.138 | 0.438 | 3.025 | 4.498 |
| **17** | -0.680 | 0.005 | 1.095 | 2.280 |
| **18** | -1.073 | -0.670 | 0.158 | 1.020 |
| **19** | -0.825 | -0.363 | 0.845 | 2.215 |
| **20 (Comp)** | -0.885 | 0.335 | 2.120 | 3.580 |
| **21 (Comp)** | -0.845 | 0.338 | 1.705 | 2.875 |
| **22** | -0.893 | 0.165 | 0.918 | 1.333 |

The stabilising composition of Sample 16 represents an industry standard involving a calcium stearate acid scavenger. The stabilising composition of Sample 20 represents an industry standard which does not utilise a stearate acid scavenger (instead using DHT). The stabilising composition of Sample 21 contains no acid scavenger.

From the results, it can be seen that the polypropylene samples stabilised with the stabilising compositions in accordance with the present invention (samples 17, 18, 19 and 22) show less discolouration than the polypropylene samples stabilised with the industry standard stabilising compositions.

The melt flow rate of the polypropylene composition of Sample 16, Sample 18, Sample 21 and Sample 22 was determined in accordance with standard test method ASTM D1238L using a CEAST^{™} 7026 Melt Flow Tester (230°C, 2.16 kg, 2.095 mm die). The melt flow rate was determined following compounding (pass 0) and after pass 5. An increase in the melt flow rate value is indicative of degradation of the sample. The results are shown in Table 8.

**TABLE 8**

| **Sample** | **Melt Flow Rate (g/10 min)** | |
|---|---|---|
| | **Pass 0** | **Pass 5** |
| **16 (Comp)** | 1.83 | 5.34 |
| **18** | 1.99 | 4.59 |
| **21 (Comp)** | 2.37 | 4.87 |
| **22** | 2.06 | 4.48 |

From the results it can be seen that the polypropylene stabilised using the stabilising composition according to the present invention (Sample 18) retained its melt flow rate better than the polypropylene stabilised using an industry standard stabilising composition (Sample 16). Sample 16 shows a 292% increase in melt flow rate after 5 passes through the extruder whereas Sample 18 only shows a 231% increase. This corresponds to a significant improvement in melt flow rate retention on heat aging for Sample 18.

For Samples 21 and 22, it can be seen that the polypropylene sample stabilised in accordance with the present invention (Sample 22) exhibited a comparable melt flow rate to the polypropylene sample stabilised with the industry standard stabilising composition (Sample 21).

### 3. STABILISATION OF A POLYOLEFIN - ANHYDROUS VS. MONOHYDRATE HYPOPHOSPHITE

### Preparing the Stabilised Composition

The polyolefin base material was polypropylene.

Table 9 shows the different components that were used in the stabilising compositions.

**TABLE 9**

| **Component** | **Shorthand** | **Type** |
|---|---|---|
| ANOX^{™} 20 | A20 | Phenolic antioxidant |
| ALKANOX^{™} 240 | A240 | Phosphite antioxidant |
| Anhydrous sodium hypophosphite | Na Hyp (an) | Secondary inorganic antioxidant |
| Monohydrate sodium hypophosphite | Na Hyp (mono) | Secondary inorganic antioxidant |
| 1:1 NaH₂PO₄:Na₂HPO₄ | Na P | Buffering agent |

Table 10 shows details of the polypropylene compositions that were prepared.

**TABLE 10**

| **Sample** | **PP Base Polymer (g)** | **A20 (g)** | **A240 (g)** | **Na Hyp (an) (g)** | **Na Hyp (mono) (g)** | **Na P (g)** | **Total (g)** |
|---|---|---|---|---|---|---|---|
| **23** | 599.100 | 0.240 | 0.480 | 0.090 | 0 | 0.090 | 600.000 |
| **24** | 599.082 | 0.240 | 0.480 | 0 | 0.108 | 0.090 | 600.000 |
| **25 (Comp)** | 599.280 | 0.240 | 0.480 | 0 | 0 | 0 | 600.000 |

Each of the samples was formed by compounding all of the components in an extruder at 230°C under nitrogen to form a polypropylene composition.

It should be noted that a slightly greater amount of monohydrate sodium hypophosphite was used in Sample 24 compared to the anhydrous sodium hypophosphite used in Sample 23. This was done to ensure that the phosphorous loading of the samples was the same.

### Colour Stability

Each of the polypropylene compositions was multi-passed through the extruder at 260°C under air. The discolouration of the compositions was measured in terms of Yellow Index (YI) using a colorimeter. YI values were taken following compounding (pass 0) and after pass 1, 3 and 5. The lower the YI value, the less discolouration of the composition. The results are shown in Table 11.

**TABLE 11**

| **Sample** | **YI Value** | | | |
|---|---|---|---|---|
| | **Pass 0** | **Pass 1** | **Pass 3** | **Pass 5** |
| **23** | 0.43 | 1.92 | 3.33 | 5.65 |
| **24** | -0.06 | 1.50 | 2.86 | 4.08 |
| **25 (Comp)** | 0.08 | 1.44 | 3.85 | 8.61 |

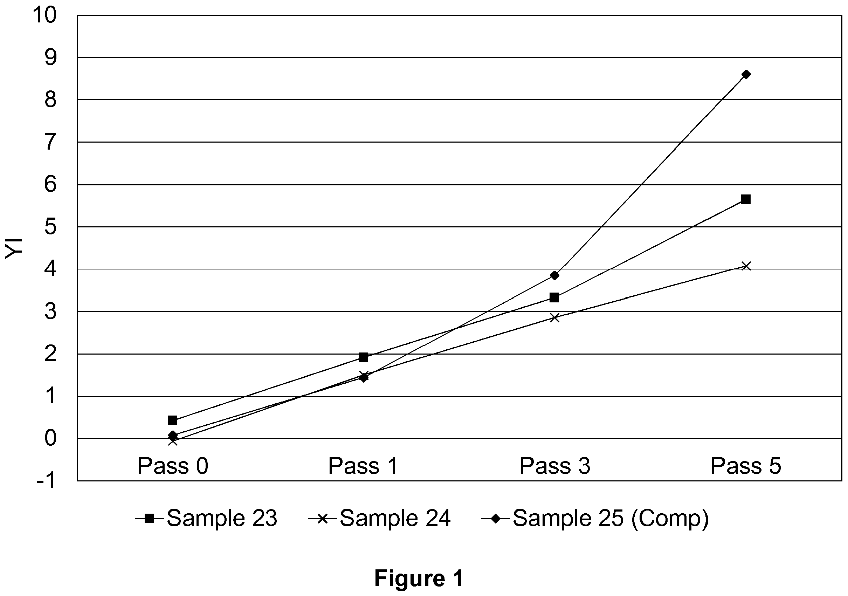

These results are displayed graphically in Figure 1.

The stabilising composition of Sample 25 represents an industry standard having no acid scavenger.

From the results, it can be can be seen that the polypropylene samples stabilised in accordance with the present invention (samples 23 and 24) show less discolouration than the polypropylene sample stabilised with the industry standard stabilising composition (Sample 25).

In addition, it can be seen that the sample containing the monohydrate sodium hypophosphite (Sample 24) performed slightly better than the sample containing the anhydrous sodium hypophosphite (Sample 23) with respect to discolouration of the polypropylene composition.

### Melt Flow Rate

The melt flow rate of the polypropylene compositions was determined in accordance with standard test method ASTM D1238L using a CEAST^{™} 7026 Melt Flow Tester (230°C, 2.16 kg, 2.095 mm die). The melt flow rate was determined following compounding (pass 0) and after pass 5. An increase in the melt flow rate value is indicative of degradation of the sample. The results are shown in Table 12.

**TABLE 12**

| **Sample** | **Melt Flow Rate (g/10 min)** | |
|---|---|---|
| | **Pass 0** | **Pass 5** |
| **23** | 7.74 | 12.50 |
| **24** | 6.83 | 13.04 |
| **25 (Comp)** | 7.57 | 12.95 |

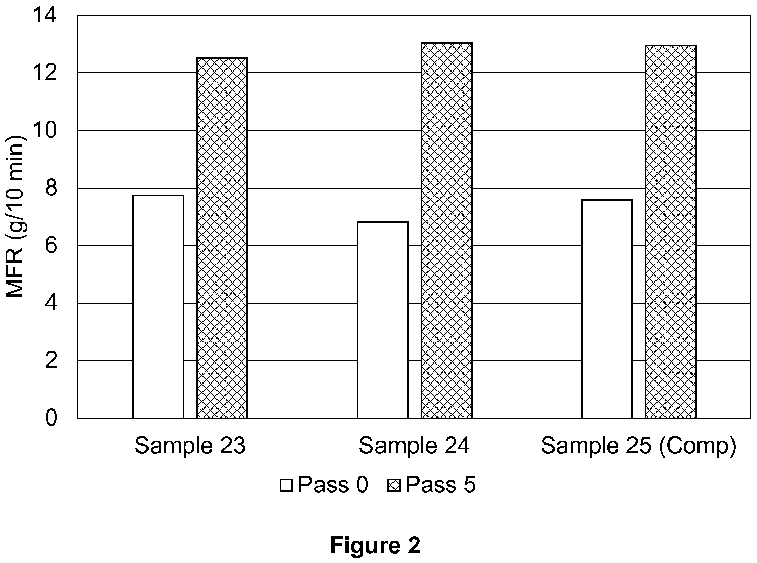

The results are displayed graphically in Figure 2.

From the results it can be seen that the polypropylene samples stabilised in accordance with the present invention (samples 23 and 24) exhibited comparable melt flow rates to the polypropylene sample stabilised with the industry standard stabilising composition (Sample 25).

Additionally, it can be seen that the polypropylene sample containing the monohydrate sodium hypophosphite (Sample 24) exhibited a comparable melt flow rate to the sample containing the anhydrous sodium hypophosphite (Sample 23).

Overall, the results show that at equal phosphorous loadings, there is no detrimental effect to colour stability or melt flow rate when using monohydrate sodium hypophosphite compared to when using anhydrous sodium hypophosphite. In fact, a slight improvement in colour stability was observed when using the monohydrate sodium hypophosphite.

## Claims

1. Use of a stabilising composition to stabilise a polyolefin or a hot melt adhesive, the stabilising composition comprising:
a. at least one antioxidant comprising one or more of:
i. a phenolic antioxidant;
ii. a phosphite antioxidant;
iii. a sulphur-containing antioxidant; and
iv. an aminic antioxidant; and
b. at least one buffering agent,
wherein the buffering agent has the capacity to buffer in aqueous solution at a pH range from 4 to 8, and
wherein the buffering agent is a solid at a temperature of 50°C or lower.

2. The use according to Claim 1, wherein the buffering agent is a solid at a temperature of 40°C or lower, a temperature of 30°C or lower, or a temperature of 25°C or lower, and 1 atmosphere pressure i.e. 101.325 kPa; and/or
wherein the buffering agent has a molecular weight of less than 500, less than 450, less than 400, or less than 350.

3. The use according to Claim 1 or Claim 2, wherein the buffering agent comprises one or more metal phosphates and/or metal pyrophosphates; and/or
wherein the buffering agent comprises a mixture of two or more metal phosphates and/or metal pyrophosphates.

4. The use according to any one of claims 1 to 3, wherein the buffering agent comprises a mixture of at least one monobasic alkali metal phosphate and at least one dibasic alkali metal phosphate.

5. The use according to any one of claims 1 to 4, wherein the buffering agent comprises one or more amino acids and/or alkali metal salts thereof, optionally wherein the amino acid and/or the alkali metal salt thereof comprises glycine, cysteine, cystine, methionine, tyrosine, histidine, arginine and/or glutamic acid.

6. The use according to any one of claims 1 to 5, wherein the buffering agent is present in an amount of from 1% to 50% by weight of the stabilising composition, from 1% to 40% by weight of the stabilising composition, from 1% to 30% by weight of the stabilising composition, from 1% to 20% by weight of the stabilising composition, from 5% to 15% by weight of the stabilising composition, or from 8% to 12% by weight of the stabilising composition.

7. The use according to any one of claims 1 to 6, wherein the stabilising composition additionally comprises a secondary inorganic antioxidant.

8. The use according to Claim 7, wherein the secondary inorganic antioxidant comprises one or more of a metal hypophosphite, a metal thiosulphate, a metal bisulphite, a metal metabisulphite and/or a metal hydrosulphite, optionally wherein the metal of the hypophosphite, thiosulphate, bisulphite, metabisulphite and/or hydrosulphite is an alkali metal and/or an alkaline earth metal.

9. The use according to Claim 8, wherein the metal hypophosphite is an anhydrous or hydrated metal hypophosphite.

10. The use according to any one of claims 7 to 9, wherein the ratio of the buffering agent to the secondary inorganic antioxidant is from 5:95 to 95:5, or from 10:90 to 90:10, or from 20:80 to 80:20, or from 30:70 to 70:30, or from 40:60 to 60:40, or from 1:2 to 2:1.

11. The use according to any one of claims 1 to 10, wherein the phenolic antioxidant comprises a semi-hindered or a hindered phenolic antioxidant; and/or
wherein the phenolic antioxidant is present in an amount of from 1% to 50% by weight of the stabilising composition, from 5% to 45% by weight of the stabilising composition, from 10% to 40% by weight of the stabilising composition, or from 15% to 35% by weight of the stabilising composition; and/or
wherein the phosphite antioxidant comprises an organophosphite antioxidant; and/or
wherein the phosphite antioxidant is present in an amount of from 20% to 90% by weight of the stabilising composition, from 25% to 85% by weight of the stabilising composition, from 30% to 80% by weight of the stabilising composition, from 35% to 75% by weight of the stabilising composition, from 40% to 70% by weight of the stabilising composition, or from 40% to 60% by weight of the stabilising composition; and/or wherein the sulphur-containing antioxidant comprises one or more thioether groups and one or more ester groups; and/or wherein the sulphur-containing antioxidant is present in an amount of from 1 % to 50% by weight of the stabilising composition, from 1 % to 40% by weight of the stabilising composition, from 1 % to 30% by weight of the stabilising composition, from 1 % to 20% by weight of the stabilising composition, from 5% to 15% by weight of the stabilising composition, or from 8% to 12% by weight of the stabilising composition.

12. The use according to any one of claims 1 to 11, wherein the antioxidant comprises a phenolic antioxidant and a phosphite antioxidant; and/or
wherein the antioxidant comprises a phenolic antioxidant, a phosphite antioxidant and a sulphur-containing antioxidant.

13. A stabilised polymeric composition comprising a polymeric base material and a stabilising composition, the stabilising composition comprising:
a. at least one antioxidant comprising one or more of:
i. a phenolic antioxidant;
ii. a phosphite antioxidant;
iii. a sulphur-containing antioxidant; and
iv. an aminic antioxidant; and
b. at least one buffering agent,
wherein the buffering agent has the capacity to buffer in aqueous solution at a pH range from 4 to 8,
wherein the buffering agent is a solid at a temperature of 50°C or lower, and wherein the polymeric base material comprises a polyolefin or a hot melt adhesive.

14. The stabilised polymeric composition according to Claim 13, wherein the stabilising composition is present in an amount of from 0.01 % to 5% by weight of the stabilised polymeric composition, from 0.01 % to 2% by weight of the stabilised polymeric composition, or from 0.1% to 1.5% by weight of the stabilised polymeric composition.

## Patentansprüche

1. Verwendung einer stabilisierenden Zusammensetzung zur Stabilisierung eines Polyolefins oder eines Schmelzklebstoffs, wobei die stabilisierende Zusammensetzung umfasst:
a. mindestens ein Antioxidationsmittel, umfassend eines oder mehrere von:
i. einem phenolischen Antioxidationsmittel;
ii. einem Phosphit-Antioxidationsmittel;
iii. einem schwefelhaltigen Antioxidationsmittel; und
iv. einem aminischen Antioxidationsmittel; und
b. mindestens ein Puffermittel,
wobei das Puffermittel die Fähigkeit aufweist, in wässriger Lösung in einem pH-Bereich von 4 bis 8 zu puffern, und
wobei das Puffermittel bei einer Temperatur von 50 °C oder weniger ein Feststoff ist.

2. Verwendung nach Anspruch 1, wobei das Puffermittel bei einer Temperatur von 40 °C oder weniger, einer Temperatur von 30 °C oder weniger oder einer Temperatur von 25 °C oder weniger und einem Druck von 1 Atmosphäre, d.h. 101,325 kPa, ein Feststoff ist; und/oder
wobei das Puffermittel ein Molekulargewicht von weniger als 500, weniger als 450, weniger als 400 oder weniger als 350 aufweist.

3. Verwendung nach Anspruch 1 oder Anspruch 2, wobei das Puffermittel ein oder mehrere Metallphosphate und/oder Metallpyrophosphate umfasst; und/oder
wobei das Puffermittel ein Gemisch aus zwei oder mehr Metallphosphaten und/oder Metallpyrophosphaten umfasst.

4. Verwendung nach einem der Ansprüche 1 bis 3, wobei das Puffermittel ein Gemisch aus mindestens einem einbasigen Alkalimetallphosphat und mindestens einem zweibasigen Alkalimetallphosphat umfasst.

5. Verwendung nach einem der Ansprüche 1 bis 4, wobei das Puffermittel eine oder mehrere Aminosäuren und/oder Alkalimetallsalze davon umfasst, wahlweise wobei die Aminosäure und/oder das Alkalimetallsalz davon Glycin, Cystein, Cystin, Methionin, Tyrosin, Histidin, Arginin und/oder Glutaminsäure umfasst.

6. Verwendung nach einem der Ansprüche 1 bis 5, wobei das Puffermittel in einer Menge von 1 % bis 50 Gew.-% der stabilisierenden Zusammensetzung, von 1 % bis 40 Gew.-% der stabilisierenden Zusammensetzung, von 1 % bis 30 Gew.-% der stabilisierenden Zusammensetzung, von 1 % bis 20 Gew.-% der stabilisierenden Zusammensetzung, von 5 % bis 15 Gew.-% der stabilisierenden Zusammensetzung, oder von 8 % bis 12 Gew.-% der stabilisierenden Zusammensetzung, vorliegt.

7. Verwendung nach einem der Ansprüche 1 bis 6, wobei die stabilisierende Zusammensetzung zusätzlich ein sekundäres anorganisches Antioxidationsmittel umfasst.

8. Verwendung nach Anspruch 7, wobei das sekundäre anorganische Antioxidationsmittel eines oder mehrere von einem Metallhypophosphit, einem Metallthiosulfat, einem Metallbisulfit, einem Metallmetabisulfit und/oder einem Metallhydrosulfit umfasst, wahlweise wobei es sich bei dem Metall von dem Hypophosphit, Thiosulfat, Bisulfit, Metabisulfit und/oder Hydrosulfit um ein Alkalimetall und/oder Erdalkalimetall handelt.

9. Verwendung nach Anspruch 8, wobei das Metallhypophosphit ein wasserfreies oder hydratisiertes Metallhypophosphit ist.

10. Verwendung nach einem der Ansprüche 7 bis 9, wobei das Verhältnis des Puffermittels zum sekundären anorganischen Antioxidationsmittel von 5:95 bis 95:5 oder von 10:90 bis 90:10 oder von 20:80 bis 80:20 oder von 30:70 bis 70:30 oder von 40:60 bis 60:40 oder von 1:2 bis 2:1 beträgt.

11. Verwendung nach einem der Ansprüche 1 bis 10, wobei das phenolische Antioxidationsmittel ein halbgehindertes oder ein gehindertes phenolisches Antioxidationsmittel umfasst; und/oder
wobei das phenolische Antioxidationsmittel in einer Menge von 1 % bis 50 Gew.-% der stabilisierenden Zusammensetzung, von 5 % bis 45 Gew.-% der stabilisierenden Zusammensetzung, von 10 % bis 40 Gew.-% der stabilisierenden Zusammensetzung oder von 15 % bis 35 Gew.-% der stabilisierenden Zusammensetzung vorliegt; und/oder
wobei das Phosphit-Antioxidationsmittel ein Organophosphit-Antioxidationsmittel umfasst; und/oder
wobei das Phosphit-Antioxidationsmittel in einer Menge von 20 % bis 90 Gew.-% der stabilisierenden Zusammensetzung, von 25 % bis 85 Gew.-% der stabilisierenden Zusammensetzung, von 30 % bis 80 Gew.-% der stabilisierenden Zusammensetzung, von 35 % bis 75 Gew.-% der stabilisierenden Zusammensetzung, von 40 % bis 70 Gew.-% der stabilisierenden Zusammensetzung oder von 40 % bis 60 Gew.-% der stabilisierenden Zusammensetzung vorliegt; und/oder wobei das schwefelhaltige Antioxidationsmittel eine oder mehrere Thioethergruppen und eine oder mehrere Estergruppen umfasst; und/oder wobei das schwefelhaltige Antioxidationsmittel in einer Menge von 1 % bis 50 Gew.-% der stabilisierenden Zusammensetzung, von 1 % bis 40 Gew.-% der stabilisierenden Zusammensetzung, von 1 % bis 30 Gew.-% der stabilisierenden Zusammensetzung, von 1 % bis 20 Gew.-% der stabilisierenden Zusammensetzung, von 5 % bis 15 Gew.-% der stabilisierenden Zusammensetzung oder von 8 % bis 12 Gew.-% der stabilisierenden Zusammensetzung vorliegt.

12. Verwendung nach einem der Ansprüche 1 bis 11, wobei das Antioxidationsmittel ein phenolisches Antioxidationsmittel und ein Phosphit-Antioxidationsmittel umfasst; und/oder
wobei das Antioxidationsmittel ein phenolisches Antioxidationsmittel, ein Phosphit-Antioxidationsmittel und ein schwefelhaltiges Antioxidationsmittel umfasst.

13. Stabilisierte Polymerzusammensetzung, umfassend ein polymeres Basismaterial und eine stabilisierende Zusammensetzung, wobei die stabilisierende Zusammensetzung umfasst:
a. mindestens ein Antioxidationsmittel, umfassend eines oder mehrere von:
i. einem phenolischen Antioxidationsmittel;
ii. einem Phosphit-Antioxidationsmittel
iii. einem schwefelhaltigen Antioxidationsmittel; und
iv. einem aminischen Antioxidationsmittel; und
b. mindestens ein Puffermittel,
wobei das Puffermittel die Fähigkeit aufweist, in wässriger Lösung in einem pH-Bereich von 4 bis 8 zu puffern,
wobei das Puffermittel bei einer Temperatur von 50 °C oder weniger ein Feststoff ist, und
wobei das polymere Basismaterial ein Polyolefin oder einen Schmelzklebstoff umfasst.

14. Stabilisierte Polymerzusammensetzung nach Anspruch 13, wobei die stabilisierende Zusammensetzung in einer Menge von 0,01 % bis 5 Gew.-% der stabilisierten Polymerzusammensetzung, von 0,01 % bis 2 Gew.-% der stabilisierten Polymerzusammensetzung oder von 0,1 % bis 1,5 Gew.-% der stabilisierten Polymerzusammensetzung vorliegt.

## Revendications

1. Utilisation d'une composition stabilisante permettant de stabiliser une polyoléfine ou un adhésif thermofusible, la composition stabilisante comprenant :
a. au moins un antioxydant comprenant un ou plusieurs éléments parmi :
i. un antioxydant phénolique ;
ii. un antioxydant de phosphite ;
iii. un antioxydant contenant du soufre ; et
iv. un antioxydant aminique ; et
b. au moins un agent tampon ;
dans laquelle l'agent tampon présente la capacité de tamponner dans une solution aqueuse dans une plage de pH comprise entre 4 et 8 ; et
dans laquelle l'agent tampon est un solide à une température de 50°C ou moins.

2. Utilisation selon la revendication 1, dans laquelle l'agent tampon est un solide à une température de 40°C ou moins, une température de 30°C ou moins, ou une température de 25°C ou moins, et à une pression atmosphérique de 1, à savoir 101,325 kPa ; et/ou
dans laquelle l'agent tampon présente un poids moléculaire inférieur à 500, inférieur à 450, inférieur à 400, ou inférieur à 350.

3. Utilisation selon la revendication 1 ou la revendication 2, dans laquelle l'agent tampon comprend un ou plusieurs phosphates métalliques et/ou pyrophosphates métalliques ; et/ou
dans laquelle l'agent tampon comprend un mélange de deux phosphates métalliques et/ou pyrophosphates métalliques ou plus.

4. Utilisation selon l'une quelconque des revendications 1 à 3, dans laquelle l'agent tampon comprend un mélange d'au moins un phosphate de métal alcalin monobasique et au moins un phosphate de métal alcalin dibasique.

5. Utilisation selon l'une quelconque des revendications 1 à 4, dans laquelle l'agent tampon comprend un ou plusieurs acides aminés et/ou leurs sels de métal alcalin, éventuellement dans laquelle l'acide aminé et/ou le sel de métal alcalin correspondant comprend de la glycine, de la cystéine, de la cystine, de la méthionine, de la tyrosine, de l'histidine, de l'arginine et/ou de l'acide glutamique.

6. Utilisation selon l'une quelconque des revendications 1 à 5, dans laquelle l'agent tampon est présent dans une quantité comprise entre 1 % et 50 % en poids de la composition stabilisante, entre 1 % et 40 % en poids de la composition stabilisante, entre 1 % et 30 % en poids de la composition stabilisante, entre 1 % et 20 % en poids de la composition stabilisante, entre 5 % et 15 % en poids de la composition stabilisante, ou entre 8 % et 12 % en poids de la composition stabilisante.

7. Utilisation selon l'une quelconque des revendications 1 à 6, dans laquelle la composition stabilisante comprend en outre un anti-oxydant inorganique secondaire.

8. Utilisation selon la revendication 7, dans laquelle l'anti-oxydant inorganique secondaire comprend un ou plusieurs éléments parmi un hypophosphite métallique, un thiosulfate métallique, un bisulfite métallique, un métabisulfite métallique et/ou un hydrosulfite métallique, éventuellement dans laquelle le métal de l'hypophosphite, du thiosulfate, du bisulfite, du métabisulfite et/ou de l'hydrosulfite est un métal alcalin et/ou un métal alcalino-terreux.

9. Utilisation selon la revendication 8, dans laquelle l'hypophosphite métallique est un hypophosphite métallique anhydre ou hydraté.

10. Utilisation selon l'une quelconque des revendications 7 à 9, dans laquelle le rapport entre l'agent tampon et l'anti-oxydant inorganique secondaire est compris entre 5:95 et 95:5, ou entre 10:90 et 90:10 ou entre 20:80 et 80:20 ou entre 30:70 et 70:30 ou entre 40:60 et 60:40, ou entre 1:2 et 2:1.

11. Utilisation selon l'une quelconque des revendications 1 à 10, dans laquelle l'anti-oxydant phénolique comprend un anti-oxydant phénolique semi-encombré ou encombré ; et/ou
dans laquelle l'antioxydant phénolique est présent dans une quantité comprise entre 1 % et 50 % en poids de la composition stabilisante, entre 5 % et 45 % en poids de la composition stabilisante, entre 10 % et 40 % en poids de la composition stabilisante, ou entre 15 % et 35 % en poids de la composition stabilisante ; et/ou
dans laquelle l'antioxydant de phosphite comprend un anti-oxydant d'organophosphite ; et/ou
dans laquelle l'antioxydant de phosphite est présent dans une quantité comprise entre 20 % et 90 % en poids de la composition stabilisante, entre 25 % et 85 % en poids de la composition stabilisante, entre 30 % et 80 % en poids de la composition stabilisante, entre 35 % et 75 % en poids de la composition stabilisante, entre 40 % et 70 % en poids de la composition stabilisante, ou entre 40 % et 60 % en poids de la composition stabilisante ; et/ou dans laquelle l'anti-oxydant contenant du soufre comprend un ou plusieurs groupes thio-éther et un ou plusieurs groupes ester ; et/ou dans laquelle l'anti-oxydant contenant du soufre est présent dans une quantité comprise entre 1 % et 50 % en poids de la composition stabilisante, entre 1 % et 40 % en poids de la composition stabilisante, entre 1 % et 30 % en poids de la composition stabilisante, entre 1 % et 20 % en poids de la composition stabilisante, entre 5 % et 15 % en poids de la composition stabilisante, ou entre 8 % et 12 % en poids de la composition stabilisante.

12. Utilisation selon l'une quelconque des revendications 1 à 11, dans laquelle l'anti-oxydant comprend un anti-oxydant phénolique et un anti-oxydant de phosphite ; et/ou
dans laquelle l'antioxydant comprend un anti-oxydant phénolique, un anti-oxydant de phosphite et un anti-oxydant contenant du soufre.

13. Composition polymère stabilisée comprenant un matériau de base polymère et une composition stabilisante, la composition stabilisante comprenant :
a. au moins un antioxydant comprenant un ou plusieurs éléments parmi :
i. un antioxydant phénolique ;
ii. un antioxydant de phosphite ;
iii. un antioxydant contenant du soufre ; et
iv. un antioxydant aminique ; et
b. au moins un agent tampon ;
dans laquelle l'agent tampon présente la capacité de tamponner dans une solution aqueuse dans une plage de pH comprise entre 4 et 8 ;
dans laquelle l'agent tapon est un solide à une température de 50°C ou moins ; et
dans laquelle le matériau de base polymère comprend une polyoléfine ou un adhésif thermofusible.

14. Composition polymère stabilisée selon la revendication 13, dans laquelle la composition stabilisante est présente dans une quantité comprise entre 0,01 % et 5 % en poids de la composition polymère stabilisée, entre 0,01 % et 2 % en poids de la composition polymère stabilisée, ou entre 0,1 % et 1,5 % en poids de la composition polymère stabilisée.
